Europäisches Patentamt

European Patent Office

Office européen des brevets

(11) Veröffentlichungsnummer: **0 291 544**
**A1**

(12) **EUROPÄISCHE PATENTANMELDUNG**

(21) Anmeldenummer: 87107202.1

(22) Anmeldetag: 18.05.87

(51) Int. Cl.⁴: **F16H 1/445**

(43) Veröffentlichungstag der Anmeldung:
**23.11.88 Patentblatt 88/47**

(84) Benannte Vertragsstaaten:
**DE FR GB IT**

(71) Anmelder: **Rohs, Ulrich, Dr.-Ing.**
**Roonstrasse 11**
**D-5160 Düren(DE)**

(72) Erfinder: **Rohs, Ulrich, Dr.-Ing.**
**Roonstrasse 11**
**D-5160 Düren(DE)**
Erfinder: **Bartsch, Hans-Joachim, Dipl.-Ing.**
**Maria-Thersia-Allee 12**
**D-5100 Aachen(DE)**

(74) Vertreter: **Rauh, Wolfgang K., Dipl.-Ing.**
**Patentanwalt**
**Mittelstrasse 55**
**D-5100 Aachen(DE)**

(54) **Sperrbares Differential.**

(57) Sperrbares Differential mit einem Tellerrad (2l) als Antriebsteil, zwei auf den Abtriebswellen (23,24) sitzenden Abtriebsrädern (24,25) und einem mit dem Tellerrad (2l) umlaufenden Steg (22) mit darin gelagerten Planetenrädern (28), die mit den Abtriebsrädern (25,26) in Eingriff stehen, wobei zwischen der Welle (27) mindestens eines Planetenrades (28) und einer Hälfte (3l) einer von außen ansteuerbaren Kupplung (29), vorzugsweise Magnetpulverkupplung, deren andere Hälfte (30) mit dem Steg (22) verbunden ist, ein Übersetzungsgetriebe (33,34;35,36) angeordnet ist, das vorzugsweise ein übersetzendes Schneckenradgetriebe (33,34) aufweist, dessen Schnecke (34) das Abtriebsteil ist und wobei die Verzahnung des Schneckengetriebes (33,34) so ausgelegt ist, daß es verlustarm außerhalb des Selbsthemmungsbereiches arbeitet.

FIG 3

## SPERRBARES DIFFERENTIAL

Die Erfindung betrifft ein sperrbares Differential mit einem Tellerrad als Antriebsteil, zwei auf den Abtriebswellen sitzenden Abtriebsrädern und einem mit dem Tellerrad umlaufenden Steg mit darin gelagerten Planetenrädern, die mit den Abtriebsrädern in Eingriff stehen.

Die zunehmende Entwicklung von mehrachsgetriebenen Fahrzeugen macht es notwendig, Differentiale vorzusehen, die bei einseitiger Belastung infolge unterschiedlicher Haftreibung der Antriebsräder des Fahrzeuges sperrbar sind aber nicht bei jedem Drehzahlunterschied der Fahrzeugräder sperren.

Es sind bereits sperrbare Differentiale bekannt, doch befriedigen diese allgemein nicht, weil sie nur nach einer, konstruktiv bedingten Kennlinie arbeiten und nicht von außen ansteuerbar sind. Dies gilt z.B. für das unter der Bezeichnung "TORSEN" bekannte Differential dessen Planetenräder aus miteinander über Stirnzahnräder verbundenen Schnecken bestehen, die mit Schneckenrädern auf den Abtriebswellen in Eingriff stehen. Infolge der konstruktiv bedingten Selbsthemmung der Schneckenradgetriebe ergibt sich die gewünschte Sperrung.

Auch beim sogenannten Viskose-Differential, bei dem die Sperrung mittels einer mit Scherflüssigkeit gefüllten hydrodynamischen Kupplung erfolgt, ist nur eine Kennlinie gegeben, die höchstens durch die Außentemperatur eine allerdings meist unerwünschte Änderung erfährt.

Diese bekannten sperrbaren Differentiale sperren bei extrem unterschiedlichen Drehzahlen der Abtriebswellen, aber auch dann, wenn dies z.B. bei der Drehung in einer Haarnadelkurve garnicht erwünscht ist.

Der Erfindung liegt daher die Aufgabe zugrunde, ein sperrbares Differential zu schaffen, dessen Sperrkupplung von außen, z.B. über eine Fühlerelektronik oder über elektromagnetische, hydraulische oder pneumatische Steuereinrichtungen entsprechend den tatsächlichen Erfordernissen kontinuierlich ansteuerbar ist.

Hierfür eignen sich jedoch allgemein Kupplungen, die das Tellerrad direkt mit einer Abtriebswelle verbinden, wenig, da die relativ geringe Drehzahl der Abtriebswelle eine für entsprechend hohe Drehmomente ausgelegte Kupplung erfordert und diese wiederum zu träge reagiert.

Die Lösung der gestellten Aufgabe ergibt sich gemäß der Erfindung aus den kennzeichnenden Merkmalen des Anspruches 1.

Diese Lösung bietet den Vorteil, daß alle Planetenräder auf ein und dieselbe Kupplung arbeiten und diese, da die Drehzahldifferenz sehr hoch sein kann, relativ klein ausgeführt werden kann.

Die erfindungsgemäße Lösung gilt sowohl für Scheibenrad- als auch Kegelraddifferentiale und ist in den Unteransprüchen noch im einzelnen weitergeführt und gekennzeichnet.

Nachstehend ist die Erfindung anhand einiger in der Zeichnung dargestellter Ausführungsbeispiele näher erläutert. Es zeigen:

Fig.1 ein Scheibenraddifferential nach der Erfindung,

Fig.2 eine Teilansicht des Scheibenraddifferentials der Fig.1 in Richtung des Pfeiles II und

Fig.3 ein Kegelraddifferential nach der Erfindung.

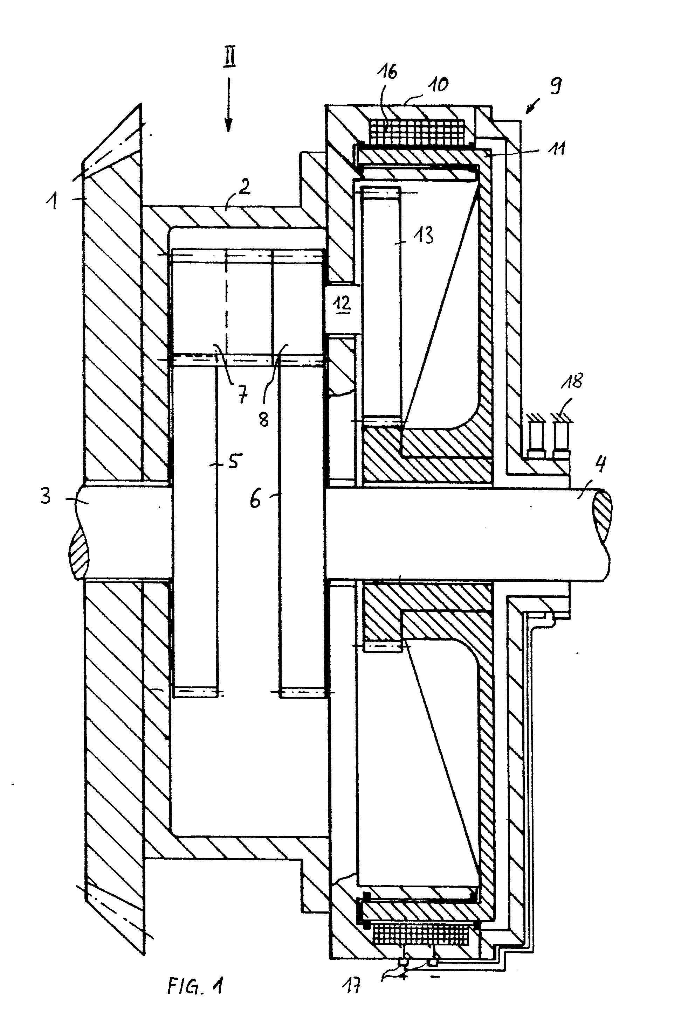

Das in Fig.1 dargestellte sperrbare Scheibenraddifferential besteht aus einem Tellerrad 1 als Antriebsteil, das fest mit einem Steg 2 verbunden ist. Dieser Steg 2 ist wiederum fest mit der einen Hälfte 10 einer von außen ansteuerbaren Kupplung 9 verbunden, die im Gehäuse 18 des Getriebes gelagert ist.

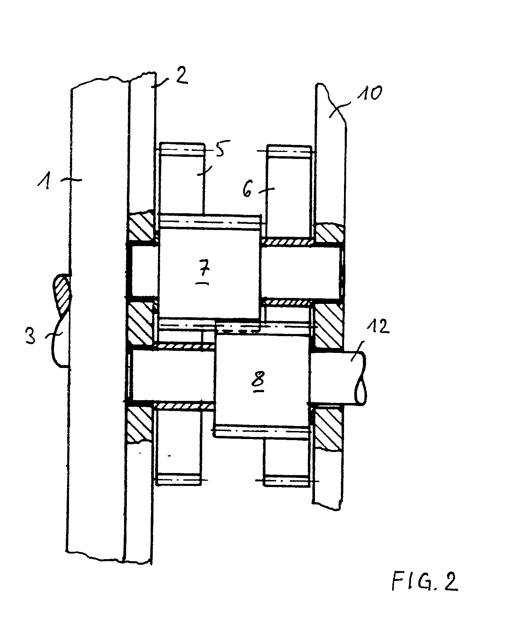

Im topfförmigen Steg 2 und der Kupplunghälfte 10 sind fluchtend die Abtriebswellen 3 und 4 zentrisch gelagert. Sie tragen an den einander mit Abstand zugekehrten Wellenenden je ein - scheibenförmiges Abtriebsrad 5 bzw. 6, die als Stirnräder verzahnt sind. Entsprechend exzentrisch sind im Steg 2 einerseits und un der damit fest verbundenen Kupplungshälfte 10 andererseits mehrere paarweise miteinander in Eingriff stehende (Fig.2) stirnradverzahnte Planetenräder 7 bzw. 8 gelagert, jeweils mit dem ihnen zugeordneten Abtriebsrad 5 bzw. 6 der Abtriebswellen 3 bzw. 4 in Eingriff stehen.

Wie die Zeichnung zeigt, sitzt auf den Wellen 12 der in der Kupplungshälfte 10 gelagerten Planetenräder 8 jeweils ein relativ großes Stirnzahnrad 13, das mit einer Verzahnung 14 der im Durchmesser kleineren Nabe 15 der anderen Kupplungshälfte 11 der Kupplung 9 in Antriebsverbindung steht. Bei der Kupplung 9 handelt es sich im vorliegenden Fall um eine Magnetpulverkupplung, deren Magnete 16 in der Kupplungshälfte 10 untergebracht und über Schleifkontakte 17 von außen ansteuerbar sind.

In Abhängigkeit nicht nur von der Differenzdrehzahl der Kupplungshälften sondern auch zusätzlicher, von außen in die Steuereinrichtung zur Betätigung der Magnete einführbarer Steuersignale läßt sich die Kupplung kontinuierlich abbremsen und in bzw. außer Eingriff bringen.

Anstelle einer Magnetpulverkupplung kann auch eine druckmittelbetätigte oder Wirbelstromkupplung vorgesehen sein.

Bei der dargestellten Konstruktion arbeiten alle Planetenräder 8 gemeinsam auf die eine Kupplungshälfte l0, wobei die Drehzahl der Planetenräder 8 durch die Zahnradübersetzung l3,l4 vergrößert wird. Die anfallende Leistung, die die Kupplung 9 aufzunehmen hat, wird somit im wesentlichen über eine hohe Drehzahl übertragen, so daß wegen der geringeren Drehmomentenbelastung eine relativ - schwache und kleine Kupplung verwendbar ist.

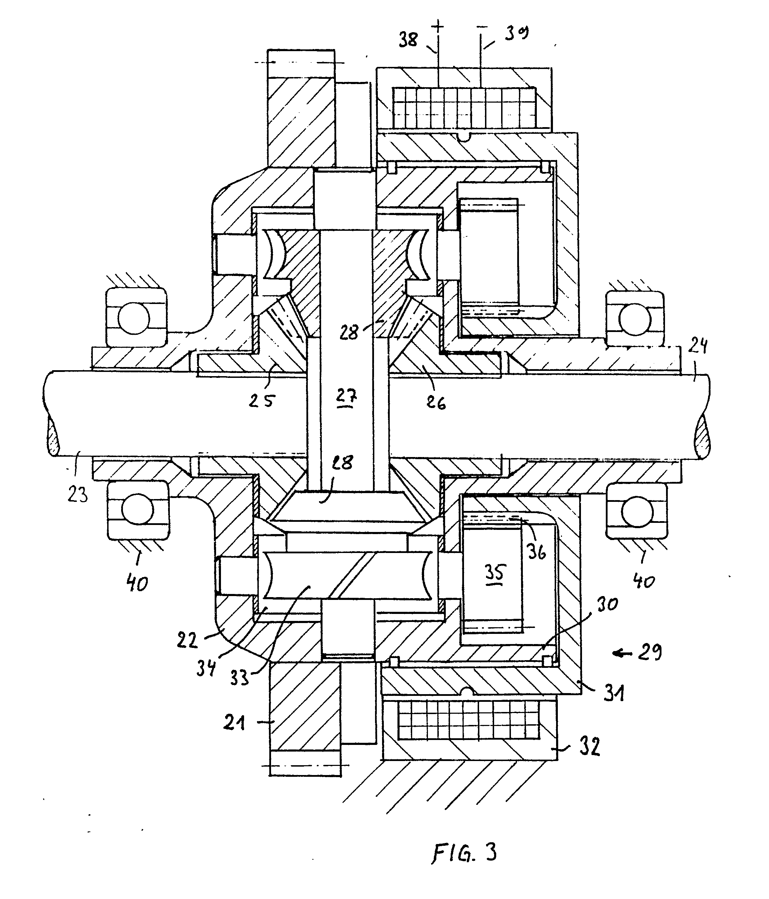

Fig.3 zeigt die erfindungsgemäße Lösung der gestellten Aufgabe bei einem Kegelraddifferential. Dieses besteht aus einem Tellerrad 2l als Antriebsteil, das fest mit dem Steg 22 verbunden ist. In dem Steg 22 sind die Abtriebswellen 23,24 drehbar gelagert, während der Steg 22 seinerseits drehbar im nur schematisch dargestellten Gehäuse 40 drehbar gelagert ist. Auf den eineander zugekehrten Enden der Abtriebswellen 23,24 sitzen die als Kegelzahnräder ausgebildeten Abtriebsräder 25,26.

Im Steg 22 sind Wellen 27 gelagert, auf denen jeweils die ebenfalls als Kegelzahnräder ausgebildeten Planetenräder 28 sitzen. Ferner sitzen auf diesen Wellen 27 jeweils ein Schneckenrad 33, das antreibend mit jeweils einer im Steg 22 gelagerten Schnecke 34 in Eingriff steht. Die Verzahnung dieses Schneckengetriebes ist so gewählt, daß es verlustarm außerhalb des Selbsthemmungsbereiches arbeitet. Auf den Wellen dieser Schnecken 34 sitzt jeweils ein Stirnzahnrad 35, das auf eine Verzahnung 36 der auf dem Steg 22 gelagerten Nabe der Kupplungshälfte 3l einer von außen ansteuerbaren Kupplung 29, einwirkt. Die andere Kupplungshälfte 30 der Kupplung 29, die im dargestellten Beispiel eine Magnetpulverkupplung ist, ist fest mit dem Steg 22 verbunden und läuft mit diesem gegebenefalls um. Die topfförmig ausgebildete Kupplungshälfte 3l übergreift den Rand der ebenfalls topfförmig ausgebildeten, gegenüberstehenden Kupplungshälfte 30 und wird selbst von einem ortsfesten Magnetring 32 umgeben, an dem die elektrischen Zuführleitungen 38,39 angeschlossen sind. Anstelle einer Magnetpulverkupplung kann auch eine Wirbelstromkupplung oder eine druckmittelbetätigte Kupplung verwendet werden.

Anstelle des Schneckengetriebes 33,34 kann auch eine Hypoidverzahnung vorgesehen sein, die praktisch einen Extremfall der Schneckenverzahnung darstellt.

Dadurch, daß die Drehbewegung der Planetenräder sowohl über das Schneckengetriebe 33,34, als auch über die Stirnradverzahnung 35,36 ins Schnelle übersetzt auf die Kupplungshälfte 3l übertragen wird, ist die Verwendung einer Magnetpulverkupplung besonders günstig. Diese läßt sich über eine nicht dargestellte Steuereinrichtung, die Signale der entsprechend relevanten Fahrzeugteile in Steuersignale umwandelt und auf den Magnetring 32 überträgt, gesteuert betätigen. Durch Betätigung der Kupplung 29 erfolgt eine kontinuierliche Bremsung zwischen dem Steg und den Planetenrädern bis zur Vollbremsung, d.h. Sperrung.

## Ansprüche

l. Sperrbares Differential mit einem Tellerrad als Antriebsteil, zwei auf den Abtriebswellen sitzenden Abtriebsrädern und einem mit dem Tellerrad umlaufenden Steg mit darin gelagerten Planetenrädern, die mit den Abtriebsrädern in Eingriff stehen, **dadurch gekennzeichnet,** daß zwischen der Welle (l2,27) mindestens eines Planetenrades (8,28) und einer Hälfte (ll,3l) einer von außen ansteuerbaren Kupplung (9,29) deren andere Hälfte (l0,30) mit dem Steg (2,22) verbunden ist, ein Übersetzungsgetriebe (l3,l4;33,34;35,36) angeordnet ist.

2. Sperrbares Differential nach Anspruch l, **dadurch gekennzeichnet,** daß das Differential ein Kegelraddifferential ist und daß das Übersetzungsgetriebe (33,34;35,36) ein übersetzendes Schneckenradgetriebe (33,34) aufweist, dessen Schnecke (34) das Abtriebsteil ist und daß die Verzahnung des Schneckengetriebes (33,34) so ausgelegt ist, daß es verlustarm außerhalb des Selbsthemmungsbereiches arbeitet.

3. Sperrbares Differential nach Anspruch l, **dadurch gekennzeichnet,** daß das Differential ein Kegelraddifferential ist und daß das Übersetzungsgetriebe mindestens ein Hypoidzahnradpaar aufweist.

4. Sperrbares Differential nach einem der Ansprüche l bis 3, **dadurch gekennzeichnet,** daß die ansteuerbare Kupplung (9,29) eine Magnetpulverkupplung ist.

5. Sperrbares Differential nach einem der Ansprüche l bis 3, **dadurch gekennzeichnet,** daß die ansteuerbare Kupplung (9,29) eine Wirbelstromkupplung ist.

6. Sperrbares Differential nach einem der Ansprüche l bis 3, **dadurch gekennzeichnet,** daß die ansteuerbare Kupplung (9,29) eine druckmittelbetätigte Kupplung ist.

0 291 544

FIG. 1

FIG. 2

FIG. 3

0 291 544

Europäisches
Patentamt

**EUROPÄISCHER RECHERCHENBERICHT**

Nummer der Anmeldung

EP 87 10 7202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 221 991 (A. VOLK)<br>* Figuren 1,2 *<br>--- | 1,2 | F 16 H 1/445 |
| X | US-A-1 668 352 (BRACKENBURY)<br>* Insgesamt *<br>----- | 1,3 | |
| | | | **RECHERCHIERTE SACHGEBIETE (Int. Cl.4)**<br><br>F 16 H |

Der vorliegende Recherchenbericht wurde für alle Patentansprüche erstellt

| Recherchenort | Abschlußdatum der Recherche | Prüfer |
|---|---|---|
| DEN HAAG | 18-01-1988 | BEERNAERT J.E. |